# FASCICULE DE BREVET EUROPEEN

(11) **EP 0 798 186 B1**
(45) Date de publication et mention de la délivrance du brevet: **16.08.2001**
(21) Numéro de dépôt: 97400716.3
(22) Date de dépôt: 28.03.1997
(51) Int. Cl.: B60S 1/34, F16B 41/00

(54) **Bras d'essuie-glace, notamment pour véhicule automobile**
Wischerarm für eine Scheibenwischeranlage,insbesondere für Kraftfahrzeuge
Windscreen-wiper arm, especially for motor vehicle

(30) Priorité: 29.03.1996 FR 9603966
(43) Date de publication de la demande: 01.10.1997
(73) Titulaire: VALEO SYSTEMES D'ESSUYAGE, 78321 La Verrière (FR)
(72) Inventeur: Lisiecki, Bruno, 92320 Chatillon (FR)
(74) Mandataire: Le Forestier, Eric

(56) Documents cités:
- DE-A- 4 408 733
- DE-B- 1 099 875
- FR-A- 2 640 211
- GB-A- 637 671

## Description

La présente invention concerne un bras d'essuie-glace, qui est destiné notamment à équiper un véhicule automobile.

Il s'agit d'un bras d'essuie-glace de type classique, comprenant un carter articulé sur un support mobile - couramment appelé tête - qui est destiné à être fixé au moyen d'un écrou sur la portion d'extrémité filetée d'un arbre de commande animé d'un mouvement pivotant de va-et-vient. La tête présente une ouverture autorisant le passage de cette extrémité ; l'ouverture a une forme conique qui s'emmanche, au moment de la fixation sur l'arbre, sur une portion conique de celui-ci attenante à l'extrémité filetée.

Traditionnellement, les bras d'essuie-glace sont des pièces fabriquées par des équipementiers et fournies aux constructeurs automobiles, qui en assurent la fixation sur l'arbre de commande.

Pour supprimer la manipulation de l'écrou au moment du montage, et favoriser l'automatisation du vissage, par visseuse automatique, il a déjà été proposé de prémonter l'écrou dans le bras, de manière imperdable.

Un système de ce genre est décrit par exemple dans le document FR-A-2 640 211, dont les figures 2 et 3 illustrent la configuration de l'écrou et de la tête destinée à le recevoir.

L'écrou possède une embase circulaire, en forme de rondelle, apte à être engagée par coulissement dans un logement entourant l'ouverture, ce logement ayant des rainures latérales formant glissières pour l'embase.

Après engagement, les rebords d'entrée des rainures sont déformés par écrasement, de manière à empêcher que l'écrou ne ressorte.

L'écrou est donc emprisonné dans son logement, coaxialement à l'ouverture.

Le bras est livré par l'équipementier au constructeur avec cet écrou prémonté.

Cette technique présente néanmoins un inconvénient lié au fait qu'il est nécessaire de procéder à une opération spéciale de blocage de l'écrou dans son logement, par martelage des bords d'entrée du logement. Cette opération additionnelle est nécessairement coûteuse.

Par ailleurs, pour une production de grande série, la mise en place de l'écrou se fait de manière automatisée, à l'aide d'un robot. Cette opération doit naturellement être faite avant l'opération de martelage des bords.

En cas de mauvaise synchronisation des deux opérations, notamment si le martelage des bords est fait avant la mise en place de l'écrou, cette mise en place ne peut plus se faire et il est nécessaire de mettre au rebut l'ensemble du bras.

On connaît par ailleurs par le document DE-A-44 08 733 un bras d'essuie-glace selon le préambule de la revendication 1, qui décrit diverses solutions pour emprisonner un écrou au droit de l'ouverture pour l'arbre de commande, d'une façon qui ne présente pas les inconvénients de FR-A-2 640 211.

Toutefois ces dispositifs de retenue connus n'empêchent pas que l'arbre de commande, lorsqu'il est introduit dans son ouverture, vienne déplacer l'écrou en le faisant éventuellement basculer par rapport à son axe.

Il en résultera alors un défaut d'alignement par rapport à l'outil de vissage, ce qui est tout à fait indésirable dans le cas d'un montage robotisé car les risques d'incident sur la chaîne de montage seront rédhibitoires.

C'est pourquoi, l'objectif de l'invention est de résoudre ce problème en proposant un dispositif dans lequel le prépositionnement de l'écrou se fasse d'une manière simple et sûre, l'écrou pouvant être enlevé puis remis en place correctement s'il se pose une difficulté au moment du montage, et l'écrou pouvant occuper une position qui ne sera pas affectée par l'introduction de l'arbre de commande à travers l'ouverture prévue dans la tête.

L'invention a donc pour objet un bras d'essuie-glace tel que défini dans la revendication 1.

Naturellement, les chandelles autorisent également le déplacement axial de l'écrou, au moins lorsque l'opération de vissage a commencé.

L'écrou peut alors être vissé sur la portion filetée de l'arbre, au moyen d'un outil approprié, notamment à l'aide d'une visseuse automatisée.

Par ailleurs, un certain nombre de caractéristiques avantageuses, non limitatives de l'invention sont exposées dans les sous-revendications.

D'autres caractéristiques et avantages de l'invention apparaîtront de la description et des dessins annexés, qui en représentent à titre d'exemple non limitatif, plusieurs modes de réalisation possibles.

Sur ces dessins :
- la figure 1 est une vue générale partielle et schématique d'un bras d'essuie-glace conforme à l'invention, et plus précisément de la partie du bras située du côté de son arbre de commande, dont l'extrémité est également représentée, la vue étant une vue schématique en coupe longitudinale, le plan de coupe passant par l'axe de l'arbre de commande ; dans la situation représentée, qui correspond au début de la fixation du bras sur l'arbre de commande, le bras est positionné, avec son écrou prémonté, sur l'extrémité de l'arbre, l'outil de la visseuse entamant son approche.
- la figure 2 est une vue de dessus de la figure 1 ;
- la figure 3 est une vue de côté de la figure 1, coupée par un plan transversal passant par l'axe de l'arbre de commande ;
- la figure 4 est une vue en perspective de l'écrou et des chandelles qui le retiennent ;
- la figure 5 est une vue similaire à la figure 1, mais partielle et montrant la situation en fin de vissage ;
- les figures 6 et 7 sont des demi-vues en coupe axiale représentant la retenue de l'écrou par deux variantes possibles de chandelle ;
- la figure 8 est une vue similaire en coupe, montrant un système de retenue utilisant un ressort.

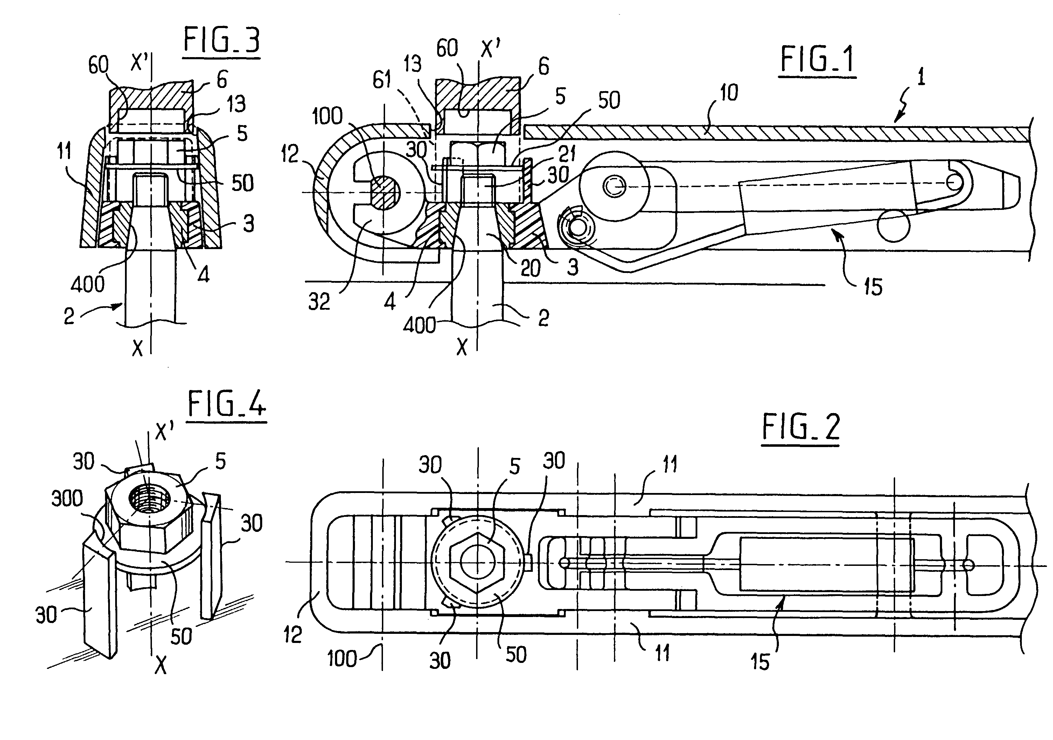

De manière bien connue, le bras d'essuie-glace représenté sur les figures 1 à 3, et qui est destiné à équiper un véhicule automobile, comprend un carter 1 sur lequel est monté un balai non représenté, supporté par la partie droite arrachée (non visible) des figures 1 et 2.

Le carter 1 présente, en coupe transversale, la forme générale d'un "U" renversé, dont la partie supérieure porte la référence 10, et les joues latérales la référence 11.

L'extrémité du carter, côté arbre de commande, est recourbée et est désignée 12.

A ce niveau, le carter porte un axe transversal 100 par lequel il est articulé, de manière démontable, sur une pièce 32 qui en coupe transversale affecte la forme générale d'un "C".

La pièce 32 fait partie d'un corps en matière plastique, ou tête 3, qui supporte également un système de rappel élastique 15 relié au carter et logé dans ce dernier. Ce système 15, de type connu, permet en cours d'utilisation d'appliquer le balai contre le pare-brise ou la glace arrière du véhicule. Il est néanmoins possible de relever le bras 1 en le faisant pivoter autour de l'axe 100, à l'encontre de la force du système élastique 15.

Toujours de manière bien connue, la tête 3 est surmoulée sur un insert métallique 4 présentant une ouverture 400 de forme tronconique, à faible conicité, dont le sommet est dirigé vers le fond 10 du carter, ce qui correspond à la partie supérieure de la figure 1.

L'insert 4 est destiné à permettre le montage du bras sur l'extrémité d'un arbre de commande 2, à mouvement de va-et-vient pivotant.

A cet effet, l'arbre 2 présente, dans sa partie d'extrémité, une portion tronconique 20 destinée à s'emboîter dans l'ouverture 400, cette portion se prolongeant par une partie filetée 21.

La fixation est réalisée au moyen d'un écrou 5, qui - conformément à l'invention - est prémonté dans le bras et est livré avec celui-ci.

L'écrou 5 est représenté en perspective à la figure 4. Il s'agit d'un écrou hexagonal classique, muni d'une embase 50 qui a la forme d'une rondelle à contour circulaire (disque).

Le diamètre de la rondelle est un peu plus grand que la plus grande dimension transversale de la partie hexagonale de l'écrou.

Sur le dessus du corps 3, tout autour de l'insert 4, sont disposés trois éléments de centrage et de retenue de l'écrou, désignés 30.

Il s'agit de barrettes en forme de colonnes - ou chandelles - se dressant parallèlement à l'axe **XX'** de l'ouverture 400. Elles ont une paroi intérieure à face concave 300 en forme d'arc de cylindre, centrée sur **XX'**, complémentaire du contour de la rondelle 50.

Les trois chandelles 30 sont réparties de manière régulière, à 120° d'angle autour de **XX'**.

Les surfaces 300 se trouvent à une distance de l'axe **XX'** égale, au jeu d'emboîtement près, au rayon de l'embase circulaire 50.

En pratique, ce jeu est négatif de telle sorte que les chandelles 30 exercent radialement sur l'embase 50 un certain effort de serrage.

Les chandelles 30 délimitent donc une cheminée dans laquelle l'embase de l'écrou est emmanchée avec serrage, et cette embase peut coulisser dans la cheminée suivant **XX'**, tout en ayant à vaincre un effort de friction.

Les chandelles 30 viennent de moulage avec le corps 3 en matière plastique, et forment donc parties intégrantes de celui-ci. Elles possèdent par conséquent une certaine flexibilité, due à l'élasticité de la matière plastique, et au fait que l'aire de leur section est relativement faible.

La mise en place de l'écrou sur la tête 3 se fait de manière très simple et peu coûteuse chez l'équipementier.

Le carter 1 ayant été ouvert par pivotement autour de l'axe 100 pour dégager l'espace devant la tête 3, l'écrou 5 est simplement mis en place par translation de haut en bas suivant l'axe **XX**', et est inséré par emmanchement légèrement à force entre les trois chandelles 30.

Le bras et son écrou peuvent alors être manipulés ensemble, pour être livrés au fabricant automobile, et placés sur la chaîne de montage.

Le montage se fait, au moyen de l'outil 6 d'une visseuse automatique, apte à s'engager à travers une ouverture 13 ménagée à cet effet dans la partie 10 du carter. Cette ouverture 13 peut avantageusement être refermée à l'issue du montage, au moyen d'un bouchon obturateur approprié, par exemple en matière plastique.

L'outil 6 porte une empreinte hexagonale 60, s'adaptant sur la tête de l'écrou 5, et apte à assurer son vissage sur l'extrémité filetée 21.

Sur la figure 1, le contour de l'outil de vissage, au cours de son déplacement, est figuré par les lignes interrompues 61.

Au début de l'opération, le bras est placé sur l'extrémité de l'arbre 2 de telle manière que l'insert métallique 4 s'emmanche, par son ouverture tronconique 400, sur la portion 20 de l'arbre.

Le prépositionnement de l'écrou 5 entre les chandelles 30 correspond normalement à la situation de la figure 1, l'embase 50 étant retenue à la partie supérieure des chandelles.

Si ce n'est pas le cas, et que l'écrou se trouve initialement en position basse, la portion 21 le repousse vers le haut au moment de la mise en place du bras sur l'arbre 2.

Par conséquent, dans toutes les hypothèses, l'écrou 5 se trouve au-dessus de la portion filetée 21 au moment où commence l'opération de vissage.

Naturellement, la hauteur des chandelles est suffisante pour que ce positionnement de l'écrou soit possible.

Au cours de l'opération de vissage, l'outil 6 descend pour venir en prise avec la tête hexagonale de l'écrou 5, et est mis en rotation.

Au cours de son mouvement conjugué de rotation et de translation axiale vers le bas, l'embase 50 frotte en glissant contre les surfaces internes 300 des chandelles.

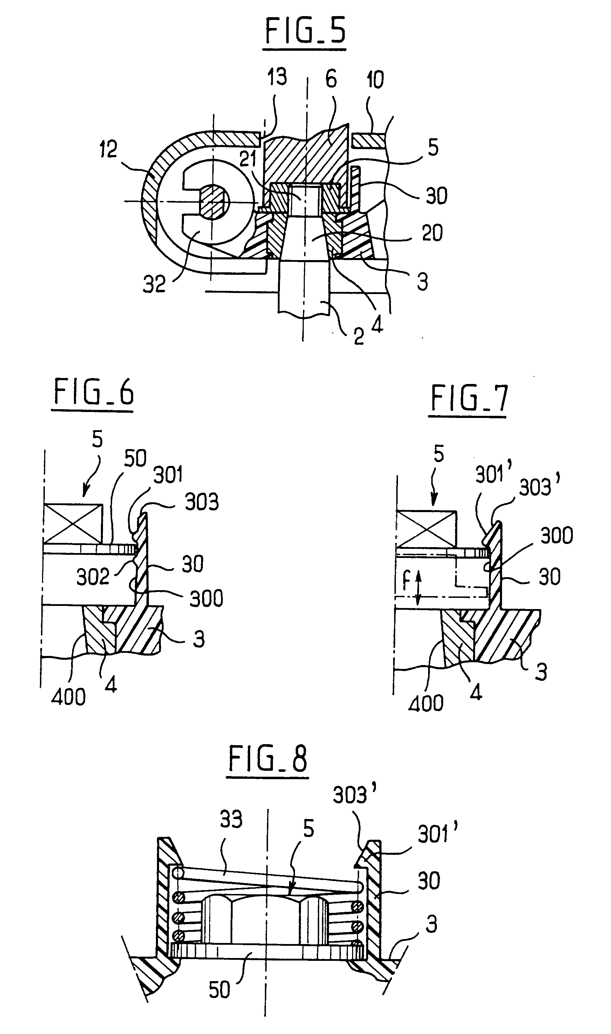

En fin d'opération, l'écrou 5 se trouve vissé à fond sur la partie 21, et le bras est par conséquent complètement solidaire de son arbre d'entraînement 2 (voir figure 5).

Dans la variante de la figure 6, il est prévu sur les faces internes 300 des chandelles 30 une paire de bossages 301, 302 aptes à emprisonner le bord de la rondelle 50 pour immobiliser l'écrou en translation axiale.

L'écrou est ainsi maintenu en place à un certain écartement du corps 3 et de l'insert 4, à une distance égale ou très légèrement supérieure à la longueur de la portion filetée 21. Ainsi tout risque de ballottement et d'échappement de l'écrou au cours de la manipulation du bras est évité.

Ces bossages correspondent à des surépaisseurs faibles, qui n'empêchent pas la mise en place de l'écrou au moment de son prépositionnement entre les chandelles, ni son glissement vers le bas au cours du vissage.

La légère flexion des chandelles au cours de ces deux étapes suffit pour autoriser le passage du bord d'embase sur le bossage.

On notera par ailleurs la présence au bord d'extrémité des chandelles d'un chanfrein d'entrée 303 destiné à favoriser la mise en place de l'écrou entre les chandelles.

Dans la variante de la figure 7, les chandelles 30 sont munies d'un seul bossage 301', en forme de becquet, dont le rôle est d'empêcher l'échappement vers le haut de l'écrou après sa mise en place entre les chandelles.

Néanmoins, dans cette variante, le déplacement axial de l'écrou, sur une hauteur limitée reste possible comme cela est illustré par la double flèche **f** à la figure 7.

Dans cette variante, un chanfrein d'entrée 303' est également prévu.

Dans la variante de la figure 8, les chandelles sont également munies d'un becquet 301' destiné à empêcher l'échappement de l'écrou.

Pour éviter le ballottement il est prévu un petit ressort 33 intercalé entre les becquets des chandelles et l'embase 50 ; sa fonction est d'appliquer élastiquement l'embase 50 contre le corps 3.

Bien entendu, ce ressort a une raideur relativement faible, qui n'est pas susceptible de contrarier la remontée de l'écrou le long des chandelles au moment du positionnement du bras sur l'arbre de commande, avant le vissage.

Dans les différents modes de réalisation qui viennent d'être décrits, l'axe d'articulation 100 du carter sur la tête 3 est situé de l'autre côté de l'axe **XX'** que le balai d'essuie-glace.

Il va de soi que la présente invention s'applique également à des configurations dans lesquelles l'axe 100 et le balai sont tous deux situés du même côté de l'axe **XX'** (comme dans le FR-A-2 640 211 déjà cité, par exemple).

Dans ce cas, le passage de l'outil 6 ne se fait pas à travers le carter 10, puisque celui-ci n'est pas présent au niveau de l'axe **XX**'.

Il peut se faire par exemple à travers un carter auxiliaire recouvrant la tête à ce niveau, et dont la paroi est traversée par une ouverture appropriée, rebouchable par un cache à l'issue de l'opération.

Une autre solution est de prévoir à ce niveau un carter amovible (formant cache) adapté pour être fixé sur la tête après montage.

Dans le mode de réalisation décrit précédemment, il a été prévu un ensemble de trois chandelles 30. Il est clair que ce chiffre n'est pas limitatif.

On pourrait par exemple prévoir quatre chandelles disposées à 90°, ou plus de quatre chandelles.

Il est simplement nécessaire que le nombre et la configuration des chandelles assurent un positionnement et un guidage correct, parallèlement à l'axe **XX'** (sans risque de basculement) de l'embase 50 et de l'écrou 5 dont il est solidaire.

## Revendications

1. Bras d'essuie-glace, notamment pour véhicule automobile, qui comprend un carter (1) articulé sur une tête (3) destinée à être fixée au moyen d'un écrou (5) sur la portion d'extrémité filetée (21) d'un arbre de commande (2), la tête (3) présentant une ouverture (400) autorisant le passage de ladite extrémité (21), dans lequel ledit écrou (5) est solidaire d'une embase (50) à contour circulaire par laquelle il est prémonté et retenu de manière imperdable dans la tête (3), sensiblement dans l'axe (XX') de ladite ouverture (400), un ensemble de chandelles (30) étant prévues sur le corps de la tête (3) autour de ladite ouverture et se dressant parallèlement audit axe (XX'), caractérisé en ce que lesdites chandelles sont aptes à enserrer l'embase (50) de manière à retenir temporairement l'écrou (5) en une position centrée sur l'ouverture (400) et écartée de la tête (3), mais sans en contrarier la faculté de rotation en vue de son vissage sur ladite portion d'arbre filetée (21).

2. Bras d'essuie-glace selon la revendication 1, caractérisé par le fait que lesdites chandelles possèdent une face interne (300) concave, en arc de cylindre complémentaire du chant de l'embase (50).

3. Bras d'essuie-glace selon la revendication 1 ou 2, caractérisé par le fait que lesdites chandelles (30) autorisent le coulissement axial de l'écrou (5) à l'encontre d'une force résistante de friction.

4. Bras d'essuie-glace selon la revendication 3, caractérisé par le fait que le coulissement axial de l'écrou est limité, les chandelles (30) étant munies à leur extrémité libre d'un bossage ou d'un becquet (301') qui empêche l'échappement de l'embase.

5. Bras d'essuie-glace selon l'une des revendications 1 à 4, caractérisé par le fait qu'il comporte des moyens élastiques tel qu'un ressort (33) tendant à appliquer l'embase (50) contre le corps (3).

6. Bras d'essuie-glace selon la revendication 1 ou 2, caractérisé par le fait que lesdites chandelles (30) sont munies de moyens de blocage en direction axiale de l'embase (50), qui maintiennent l'écrou dans sa position écartée de la tête (3).

7. Bras d'essuie-glace selon la revendication 6, caractérisé par le fait que lesdits moyens de blocage consistent en une paire de bossages (301, 302) entre lesquels vient s'insérer le bord de l'embase (50).

8. Bras d'essuie-glace selon l'une des revendications 1 à 7, caractérisé par le fait que ladite ouverture (400) est formée dans un insert métallique (4) autour duquel est surmoulé le corps en matière plastique de la tête (3), et que lesdites chandelles viennent de moulage avec ce corps.

9. Bras d'essuie-glace selon l'une des revendications 1 à 8, caractérisé par le fait que lesdites chandelles (30) sont flexibles.

10. Bras d'essuie-glace selon la revendication 9, caractérisé par le fait que lesdites chandelles (30) sont pourvues, à leur extrémité libre, d'un chanfrein (303 ; 301') facilitant la mise en place de l'embase (50) entre les chandelles.

11. Bras d'essuie-glace selon l'une des revendications 1 à 10, caractérisé par le fait qu'il comporte trois chandelles (30), angulairement réparties à 120° autour de l'axe (XX') de l'ouverture (400).

## Patentansprüche

1. Scheibenwischerarm, insbesondere für Kraftfahrzeuge, der einen gehäuseartigen Gelenkteil (1) umfaßt, der an einem Kopf (3) angelenkt ist, der dazu bestimmt ist, mittels einer Mutter (5) an dem mit einem Gewinde versehenen Endabschnitt (21) einer Antriebswelle (2) befestigt zu werden, wobei der Kopf (3) eine Öffnung (400) aufweist, die den Durchgang des besagten Endes (21) ermöglicht, wobei die besagte Mutter (5) fest mit einem Bund (50) mit kreisförmigem Umriß verbunden ist, durch den sie vormontiert und unverlierbar im Kopf (3), in etwa in der Achse (XX') der besagten Öffnung (400) gehalten ist, wobei eine Gruppe von Streben (30) am Körper des Kopfes (3) um die besagte Öffnung herum und sich parallel zu der besagten Achse (XX') erstreckend vorgesehen ist, **dadurch gekennzeichnet,** daß die besagten Streben den Bund (50) so einspannen können, daß die Mutter (5) vorübergehend in einer auf die Öffnung (400) zentrierten und zum Kopf (3) beabstandeten Position gehalten wird, aber ohne ihre Drehbarkeit im Hinblick auf ihr Aufschrauben auf dem besagten mit einem Gewinde versehenen Wellenabschnitt (21) zu beeinträchtigen.

2. Scheibenwischerarm nach Anspruch 1, **dadurch gekennzeichnet**, daß die besagten Streben eine konkave Innenfläche (300) in Form eines mit der Kante des Bunds (50) formschlüssigen Zylinderbogens besitzen.

3. Scheibenwischerarm nach Anspruch 1 oder 2, **dadurch gekennzeichnet**, daß die besagten Streben (30) die axiale Verschiebung der Mutter (5) entgegen einer Widerstandsreibkraft ermöglichen.

4. Scheibenwischerarm nach Anspruch 3, **dadurch gekennzeichnet**, daß die axiale Verschiebung der Mutter begrenzt ist, wobei die Streben (30) an ihrem freien Ende mit einem Vorsprung oder einer Nase (301') versehen sind, der bzw. die das Austreten des Bunds verhindert.

5. Scheibenwischerarm nach einem der Ansprüche 1 bis 4, **dadurch gekennzeichnet**, daß er elastische Mittel, etwa eine Feder (33), umfaßt, die dazu neigen, den Bund (50)) an den Körper (3) anzudrücken.

6. Scheibenwischerarm nach Anspruch 1 oder 2, **dadurch gekennzeichnet**, daß die besagten Streben (30) mit Mitteln zur Sicherung des Bunds (50) in axialer Richtung versehen sind, die die Mutter in ihrer zum Kopf (3) beabstandeten Position halten.

7. Scheibenwischerarm nach Anspruch 6, **dadurch gekennzeichnet**, daß die besagten Sicherungsmittel aus einem Paar Vorsprüngen (301, 302) bestehen, zwischen denen sich der Rand des Bunds (50) einfügt.

8. Scheibenwischerarm nach einem der Ansprüche 1 bis 7, **dadurch gekennzeichnet**, daß die besagte Öffnung (400) in einem Metalleinsatz (4) ausgebildet ist, um den herum der Kunststoffkörper des Kopfes (3) aufgeformt ist, und daß die besagten Streben einstückig an diesem Körper angeformt sind.

9. Scheibenwischerarm nach einem der Ansprüche 1 bis 8, **dadurch gekennzeichnet**, daß die besagten Streben (30) biegsam sind.

10. Scheibenwischerarm nach Anspruch 9, **dadurch gekennzeichnet**, daß die besagten Streben (30) an ihrem freien Ende mit einer Abschrägung (303; 301') versehen sind, um das Einsetzen des Bunds (50) zwischen den Streben zu erleichtern.

11. Scheibenwischerarm nach einem der Ansprüche 1 bis 10, **dadurch gekennzeichnet**, daß er drei Streben (30) umfaßt, die winklig in einem Winkel von 120° um die Achse (XX') der Öffnung (400) verteilt sind.

## Claims

1. Windscreen-wiper arm, especially for a motor vehicle, which comprises a shell (1) articulated onto a head (3) intended to be fixed by means of a nut (5) onto the threaded end portion (21) of a drive shaft (2), the head (3) featuring an aperture (400) letting through the said end (21), in which end the said nut (5) is integral with a base part (50) with a circular contour by which it is pre-mounted and retained so as to be captive in the head (3), substantially in the axis (XX') of the said aperture (400), a set of posts (30) being provided on the body of the head (3) around the said aperture and standing parallel to the said axis (XX'), characterised in that the said posts are able to clamp the base part (50) in such a way as temporarily to retain the nut (5) in a position centred on the aperture (400) and spaced away from the head (3), but without impeding it in its ability to rotate with a view to its being screwed onto the said threaded shaft portion (21) .

2. Windscreen-wiper arm according to Claim 1, characterised in that the said posts have a concave inner face (300) in a cylindrical arc complementary with the edge face of the base part (50).

3. Windscreen-wiper arm according to Claim 1 or 2, characterised in that the said posts (30) allow axial sliding of the nut (5) counter to a resisting friction force.

4. Windscreen-wiper arm according to Claim 3, characterised in that the axial sliding of the nut is limited, the posts (30) being equipped at their free end with a boss or a pip (301') which prevents the base part escaping.

5. Windscreen-wiper arm according to one of Claims 1 to 4, characterised in that it includes elastic means such as a spring (33) tending to apply the base part (50) against the body (3).

6. Windscreen-wiper arm according to Claim 1 or 2, characterised in that the said posts (30) are equipped with means for blocking the base part (50) in the axial direction, which maintain the nut in its position spaced away from the head (3).

7. Windscreen-wiper arm according to Claim 6, characterised in that the said blocking means consists of a pair of bosses (301, 302) between which the edge of the base part (50) is inserted.

8. Windscreen-wiper arm according to one of Claims 1 to 7, characterised in that the said aperture (400) is formed in a metal insert (4) around which the plastic body of the head (3) is overmoulded, and in that the said posts are moulded integrally with this body.

9. Windscreen-wiper arm according to one of Claims 1 to 8, characterised in that the said posts (30) are flexible.

10. Windscreen-wiper arm according to Claim 9, characterised in that the said posts (30) are provided, at their free end, with a chamfer (303; 301') facilitating the placing of the base part (50) between the posts.

11. Windscreen-wiper arm according to one of Claims 1 to 10, characterised in that it includes three posts (30), distributed at angles of 120° about the axis (XX') of the aperture (400).
